# EUROPÄISCHE PATENTSCHRIFT

(11) **EP 3 814 172 B1**
(45) Veröffentlichungstag und Bekanntmachung des Hinweises auf die Patenterteilung: **16.08.2023**
(21) Anmeldenummer: 19734321.3
(22) Anmeldetag: 19.06.2019
(51) Int. Cl.: B60Q 1/26, B60R 1/12, F21S 43/235, B29C 45/16, B29L 11/00, B29L 31/30, B60Q 1/38, F21S 43/14, F21S 43/245, F21S 43/247, F21S 43/33, F21S 43/237, F21S 43/40, F21W 103/25, F21V 8/00, F21S 43/20

(54) **VERFAHREN ZUR HERSTELLUNG EINES BLINKERMODULS SOWIE BLINKERMODUL, RÜCKBLICKEINRICHTUNG UND KRAFTFAHRZEUG**
METHOD FOR PRODUCING A BLINKER MODULE, BLINKER MODULE, REAR-VIEW DEVICE, AND MOTOR VEHICLE
PROCÉDÉ DE FABRICATION D'UN MODULE DE CLIGNOTANT AINSI QUE MODULE DE CLIGNOTANT, SYSTÈME DE RÉTROVISEUR ET VÉHICULE AUTOMOBILE

(30) Priorität: 28.06.2018 DE 102018115693
(43) Veröffentlichungstag der Anmeldung: 05.05.2021
(73) Patentinhaber: Motherson Innovations Company Limited, London EC2N 2AX (GB)
(72) Erfinder: ERHART, Volker, 70327 Stuttgart (DE); MEIER, Eugen, 70327 Stuttgart (DE); SCHMIDT, Oliver, 70327 Stuttgart (DE); RÖTZER, Ilka, 95478 Kemnath (DE)
(74) Vertreter: Weber-Bruls, Dorothée
(86) Internationale Anmeldenummer: PCT/EP2019/066269
(87) Internationale Veröffentlichungsnummer: WO 2020/002108

(56) Entgegenhaltungen:
- DE-A1-102004 046 322
- DE-A1-102004 048 669
- DE-A1-102012 211 822
- DE-A1-102016 207 964
- US-A1- 2011 235 353

## Beschreibung

Die vorliegende Erfindung betrifft ein Verfahren zur Herstellung eines Blinkermoduls, das den Eindruck eines zweigeteilten Blinkermoduls aufweist. Die Erfindung betrifft außerdem ein Blinkermodul, das mit einem solchen Verfahren hergestellt oder herstellbar ist, eine Rückblickeinrichtung mit einem solchen Blinkermodul sowie ein Kraftfahrzeug mit einer solchen Rückblickeinrichtung.

Blinkermodule sind aus dem Stand der Technik vielfältig bekannt. Diese werden dabei innerhalb eines Gehäuses der Rückblickeinrichtung integriert. Immer häufiger kommen dabei Blinker zum Einsatz, welche zwei räumlich voneinander getrennte Leuchtbereiche aufweisen. Ein erster Leuchtbereich dient dabei in erster Linie als Designfeature, das insbesondere der Rückblickeinrichtung sowie dem diese Rückblickeinrichtung umfassendes Kraftfahrzeug eine hochwertige Anmutung verleiht. Der zweite Leuchtbereich ist vorgesehen, um gesetzliche Vorgaben bezüglich der regelkonformen Ausleuchtung zu genügen. Diese beiden voneinander räumlich getrennten Leuchtbereiche werden auf unterschiedliche Weisen realisiert. In einer ersten Variante werden zwei separaten Lichtquelleneinheiten eingesetzt, welche jeweils die vorgenannten Aufgaben erfüllen. In einer zweiten Variante wird nur eine einzige Lichtquelleneinheit eingesetzt. Dabei bildet das Gehäuse einen lichtundurchlässigen Abschnitt, mithin eine Blende, zwischen den für die beiden Leuchtbereiche vorgesehenen Gehäuse-Aussparungen aus, sodass die hinter diesem Abschnitt bzw. dieser Blende angeordnete einzige Lichtquelleneinheit zweigeteilt wirkt.

Beispielsweise ist aus der DE 10 2004 046 322 B4 ein Außenrückspiegel für Kraftfahrzeuge mit einem Spiegelgehäuse bekannt, in dem ein Spiegelglas verstellbar angeordnet und eine Blinkleuchte aufgenommen ist, wobei die Blinkleuchte mindestens eine Lichtquelle und ein die Lichtquelle abdeckendes transparentes Abdeckelement aufweist, das in eine Öffnung des Spiegelgehäuses eingesetzt ist, wobei das Spiegelgehäuse einen die Öffnung unterbrechenden Steg aufweist und das Abdeckelement im Bereich des Steges mit einer Vertiefung versehen ist und unter dem Steg hindurchtaucht, wobei das gesamte Abdeckelement bündig mit der Außenfläche des Spiegelgehäuses ist und im entgegengesetzt zur Fahrtrichtung gerichteten Bereich einen Winkel von 5° bis 6° aufweist.

Auch wenn sich die bekannten Blinkermodule in der Vergangenheit durchaus bewährt haben, besteht dennoch der Wunsch, die Gestaltung der Leuchtbereiche und insbesondere der Blende gerade hinsichtlich Form und Farbe freier und kostengünstiger vornehmen zu können. So ist es insbesondere erwünscht, dass für unterschiedliche Serien unterschiedliche Gestaltungen des lichtundurchlässigen Abschnitts möglich sind, um beispielsweise Herstelleremblems vorsehen oder andere Gestaltungsvorgaben erfüllen zu können. Zudem soll auch die Montage der Blinkermodule weiter vereinfacht werden, um die immer kürzeren Taktzeiten bei der Montage einhalten zu können.

Aus der DE 10 2008 044 357 A1 ist ein Fahrzeugleuchte mit wenigstens einem transparenten Element, mit wenigstens einer Haupt-Lichtquelle, deren ausgesandtes Licht die optischen Grenzflächen des wenigstens einen transparenten Elementes im Wesentlichen senkrecht passiert, bekannt, wobei dadurch gekennzeichnet, dass das wenigstens eine transparente Element wenigstens zwei aneinander an wenigstens einer optischen Grenzfläche angrenzende optische Bereiche mit verschiedenen optischen Brechungsindex aufweist, und wenigstens in einen der angrenzenden optischen Bereiche, dessen Brechungsindex höher als der Brechungsindex des benachbarten optischen Bereichs ist, das Licht wenigstens einer Lichtquelle über wenigstens eine Licht-Einkopplungsstelle in einer im Wesentlichen entlang der wenigstens einen optischen Grenzfläche weisenden Richtung eingekoppelt ist, und das eingeleitete Licht über wenigstens eine Licht-Auskopplungsstelle ausgekoppelt ist.

Die US 6,441,943 B1 betrifft eine Fahrzeuglampenanordnung, umfassend ein Gehäuse und eine LED-Lampe, die in dem Gehäuse enthalten ist. Ein Signalspiegel umfasst einen Spiegel; und eine LED-Lampe. Die LED-Lampe enthält ein Wärmeextraktionselement.

Aus der DE 10 2004 048 669 A1 ist ein Fahrzeugseitenspiegelgerät zum Betrachten eines hinteren Bereichs eines Fahrzeugs bekannt, welches Folgendes aufweist: ein Gehäuse, das aus einem transparenten oder halbtransparenten Material besteht, dessen Querschnitte eine vorbestimmte Dicke aufweist, wobei das Gehäuse ein Lichteintrittsende, in das Licht eintritt, und ein Lichtausstrahlungsende aufweist, das dem Heck des Fahrzeugs zugewandt ist; und eine LED-Lampe, die in der Nähe des Lichteintrittsendes angeordnet ist. Das von der LED-Lampe ausgesendete Licht tritt in das Lichteintrittsende des Gehäuses ein, tritt durch dieses innerhalb des Querschnitts hindurch, wobei es zu dem Heck des Fahrzeugs von dem Lichtausstrahlungsende des Gehäuses ausgestrahlt wird.

Ferner beschreibt die DE 10 2012 211 822 A1 ein Gehäuseelement für eine Leuchteneinheit für ein Kraftfahrzeug, aufweisend eine Gehäuseschale aus thermoplastischem Kunststoffmaterial, die einen Innenraum zur Aufnahme einer Anzahl von Lichtquellen der Signalleuchteneinheit sowie einer Anzahl dieser zugeordneten Lichtleitmitteln vorgibt, wobei die Gehäuseschale durch ein Spritzgießverfahren herstellbar ist, in dem ein lichtdurchlässiger Fensterabschnitt gebildet wird. Die Anzahl von Lichtleitmitteln wird dabei beim Spritzgießverfahren einstückig mit der Gehäuseschale erhalten.

Die DE 10 2016 207 964 A1 offenbart einen Außenspiegel für ein Kraftfahrzeug mit wenigstens einem Lichtleiter, in den das Licht wenigstens einer Lichtquelle einkoppelbar und zur Realisierung wenigstens einer Lichtfunktion über wenigstens eine Lichtaustrittsfläche wieder auskoppelbar ist, wobei das Licht durch wenigstens eine Öffnung eines Außenspiegel-Gehäuses aus dem Außenspiegel nach außen tritt. Die Erfindung schlägt vor, dass der Lichtleiter vollständig oder zumindest nahezu vollständig mit wenigstens einer Beschichtung überzogen ist. Auf diese Weise kann ein gesondertes Gehäuse für den Lichtleiter eingespart werden, wobei der Lichtleiter dennoch gut geschützt ist.

Ferner offenbart die US 2011/0235353 A1 eine Fahrzeugleuchte, die mit einem Lichtleitkörper ausgebildet ist. Die Struktur weist ein Lichtführungsteil auf, das an einem Lichtführungsglied ausgebildet ist. Das Lichtführungsteil emittiert Licht in einer länglichen Form durch Bestrahlen einer ersten Leuchtdiode, die an einem Ende des Lichtführungsteils in Längsrichtung vorgesehen ist. An der Rückseite des Lichtführungsteils, die die lichtemittierende Fläche ist, ragt ein vorspringender Teil nach hinten. An der Proj ektionsstirnfläche des überstehenden Teils ist ein Lichtemissions-Unterdrückungsteil vorgesehen, das eine durch Aufdampfen gebildete Metallfolie aufweist.

Es ist Aufgabe der vorliegenden Erfindung, ein Blinkermodul anzugeben, das einfach und günstig in der Herstellung sowie in der Montage leicht zu handhaben ist und außerdem eine Große Freiheit bei der Gestaltung der einzelnen Elemente bietet. Dabei soll das Blinkermodul den Eindruck eines zweigeteilten Blinkermoduls aufweisen.

Die Aufgabe wird gemäß einem ersten Aspekt durch ein Verfahren nach Anspruch 1 gelöst..

Dadurch, dass das erste Beschichtungselement als Reflektorschicht ausgebildet wird, wird eine homogenen Ausleuchtung des Leuchtelements realisiert und/oder der Verlust von Lichtintensität von in dem Leuchtelement propagierenden Licht wird vermieden, zumindest reduziert, vorzugsweise zur Vermeidung und/oder Reduzierung
(i) des Austretens von Licht aus dem Leuchtelement am Ort des ersten Beschichtungselements innerhalb des ersten Oberflächenbereichs und/oder
(ii) des Absorbierens von Licht aus dem Leuchtelement an dem zweiten Beschichtungselement.

Dadurch, dass das zweite Beschichtungselement als Blende und zudem als lichtundurchlässiges Element ausgebildet wird, kann es mit zumindest einem Gehäuse der Rückblickeinrichtung passend zusammenwirken, um zumindest bereichsweise einen bündigen Abschluss zwischen Blende einerseits und Gehäuse andererseits zu bewirken.

Dabei ist besonders bevorzugt, dass das Bereitstellen des Leuchtelements den Schritt umfasst: Ausbilden des Lichtleiters und der Lichtscheibe mittels Spritzguss, insbesondere in einem einzigen Schritt und/oder als ein einziges Element.

Auch kann vorgesehen sein, dass das Anordnen des ersten Beschichtungselements auf dem Leuchtelement den Schritt und/oder die Schritte umfasst: Ausbilden des ersten Beschichtungselements auf dem Leuchtelement mittels Angießen und/oder Anspritzen und/oder Auftragen des ersten Beschichtungselements auf dem Leuchtelement mittels Sprühen, Dampfen, Kleben, Lackieren und/oder Spritzen.

Ebenfalls ist es vorteilhaft möglich, dass das erste Beschichtungselement zumindest bereichsweise direkt auf dem ersten Oberflächenbereich, angeordnet wird und/oder dass zwischen dem ersten Beschichtungselement und dem Leuchtelement zumindest bereichsweise zumindest ein Zwischenelement, insbesondere zumindest ein weiteres Beschichtungselement, angeordnet wird.

Dabei ist auch bevorzugt, dass das Anordnen des zweiten Beschichtungselements auf dem ersten Beschichtungselement den Schritt und/oder die Schritte umfasst: - Ausbilden des zweiten Beschichtungselements auf dem ersten Beschichtungselement mittels Angießen und/oder Anspritzen und/oder Auftragen des zweiten Beschichtungselements auf dem ersten Beschichtungselement mittels Sprühen, Dampfen, Kleben, Lackieren und/oder Spritzen.

Es wird mit der Erfindung auch vorgeschlagen, dass das zweite Beschichtungselement zumindest bereichsweise zumindest ein exponiertes Element umfasst und/oder daraus besteht, wobei das exponierte Element vorzugsweise in zumindest einer Querschnittsebene senkrecht zu zumindest einer Erstreckungsrichtung, insbesondere Haupterstreckungsrichtung, des exponierten Elements einen rechteckigen, dreieckigen, quadratischen, vieleckigen, sternförmigen, kreisförmigen, ovalen, ellipsoiden, parabelförmigen, zylindrischen und/oder halbkreisförmigen Querschnitt aufweist.

Es kann auch bevorzugt sein, dass das erste Beschichtungselement und das zweite Beschichtungselement unterschiedliche Farben aufweisen.

Auch kann vorgesehen sein, dass zumindest ein Endabschnitt und/oder Mittelabschnitt des Leuchtelements, insbesondere des Lichtleiters und/oder der Lichtscheibe, zumindest einen verjüngten Abschnitt aufweist bzw. aufweisen.

Bei der zuletzt genannten Ausführungsform ist es vorteilhaft möglich, dass sich der erste Oberflächenbereich und der zweite Oberflächenbereich zumindest teilweise entlang des verjüngten Abschnitts erstreckt.

Bei den beiden zuletzt genannten Ausführungsformen ist es außerdem vorteilhaft möglich, dass das erste Beschichtungselement und/oder das zweite Beschichtungselement den verjüngten Abschnitt zumindest bereichsweise vollständig einschließen.

Dabei ist auch bevorzugt, dass die Elemente aus der Gruppe umfassend Leuchtelement, Lichtleiter, Lichtscheibe, erstes Beschichtungselement und zweites Beschichtungselement einstückig miteinander ausgebildet sind.

Weiter kann vorteilhaft sein, dass der Schritt des Bereitstellens zumindest einer Leuchtmitteleinheit das Bereitstellen des zumindest einen Leuchtmittels in Form zumindest einer LED, zumindest einer Optik, vorzugsweise zumindest einer Linse und/oder zumindest eines Reflektors, zumindest eines elektrischen Anschlussmittels zum Anschluss der Leuchtmitteleinheit an ein elektrisches Strom- und/oder Spannungsnetz, vorzugsweise an zumindest ein Bordnetz, und/oder zumindest eine Leiterplatine, umfasst, wobei vorzugsweise die Leuchtmitteleinheit dazu ausgelegt ist, von dem Leuchtmittel abgestrahltes Licht in das Leuchtelement, insbesondere den Lichtleiter, einzukoppeln.

Es kann auch bevorzugt sein, dass das Bereitstellen des Leuchtelements, das Anordnen des ersten Beschichtungselements und/oder das Anordnen des zweiten Beschichtungselements mittels Einkomponenten-Spritzguss und/oder Mehrkomponentenspritzguss, insbesondere Zweikomponenten-Spritzguss und/oder Dreikomponenten-Spritzguss, durchgeführt wird.

Die Aufgabe wird gemäß einem zweiten Aspekt gelöst durch ein Blinkermodul hergestellt und/oder herstellbar mit einem Verfahren gemäß dem ersten Aspekt, wobei der Lichtleiter die Blinker-Funktion erfüllt und die Lichtscheibe dazu ausgelegt ist, Design-Vorgaben zu erfüllen.

Die Aufgabe wird gemäß einem dritten Aspekt gelöst durch eine Rückblickeinrichtung für ein Kraftfahrzeug umfassend zumindest ein Blinkermodul gemäß dem zweiten Aspekt, wobei die Blende mit zumindest einem Gehäuse der Rückblickeinrichtung passend zusammenwirkt, um zumindest bereichsweise einen bündigen Abschluss zwischen Blende einerseits und Gehäuse andererseits zu bewirken.

Die Aufgabe wird gemäß einem vierten Aspekt gelöst durch ein Kraftfahrzeug umfassend zumindest eine Rückblickeinrichtung gemäß dem dritten Aspekt.

Der Erfindung liegt somit die überraschende Erkenntnis zugrunde, dass ein Blinkermodul besonders einfach und günstig herstellbar ist, wenn unmittelbar auf dem Leuchtelement ein erstes Beschichtungselement und auf diesem wiederum ein zweites Beschichtungselement angeordnet wird. So haben die Erfinder erkannt, dass das zweite Beschichtungselement als Blende konzipiert werden kann und in vorteilhafter Weise direkt mit dem Modul bereitgestellt werden kann. Damit muss die Blende nicht mehr an dem Gehäuse der Rückblickeinrichtung vorgesehen werden. Dadurch wiederum kann ein und dieselbe Grundform des Gehäuses für eine Vielzahl von verschiedenen Ausführungsformen von Blinkermodulen eingesetzt werden, da das veränderliche Element in Form der Blende nicht Teil des Gehäuses sondern des Blinkermoduls ist. Somit lässt sich einerseits das Gehäuse in einer größeren Stückzahl und somit kostengünstiger fertigen. Andererseits lässt sich auch das zweite Beschichtungselement kostengünstig herstellen, da dessen Herstellung ein separater Verfahrensschritt bei der Herstellung des Blinkermoduls darstellt und damit, wenn nötig, zeitlich und räumlich auch unabhängig von den übrigen Schritten ausgeführt werden kann. Damit können auch kleinere Serien vergleichsweise kostengünstig nach individuellen Vorgaben hergestellt werden. So können in jedem der Fälle insbesondere Form und Farbe des zweiten Beschichtungselements an die jeweiligen Anforderungen angepasst werden. Dies ist dabei besonders einfach und kostengünstig möglich, wenn das zweite Beschichtungselement mittels Spritzguss ausgebildet wird, da dies sehr variabel einsetzbar ist.

Auch wurde von den Erfindern das wirkungsvolle Zusammenspiel von ersten und zweiten Beschichtungselement erkannt. Durch Übernahme jeweils eigener Funktionen konnten die beiden Beschichtungselemente jeweils speziell für ihre Aufgabe konzipiert werden. Das erste Beschichtungselement verhindert ein Austreten von Strahlung, mithin Licht, aus dem Leuchtelement in einem Bereich, in dem dieses von außen sowieso nicht sichtbar wäre. Alternativ oder Ergänzend wird durch das erste Beschichtungselement auch verhindert, dass Strahlung bzw. Licht aus dem Leuchtelement an dem zweiten Beschichtungselement absorbiert wird. In beiden Fällen würde das Licht dem Leuchtelement verlustig werden. Damit sorgt das erste Beschichtungselement für ausreichend Lichtintensität in allen Bereichen des Leuchtelements sowie ergänzend für eine zumindest weitestgehend homogene Ausleuchtung des Leuchtelements. Außerdem wird damit auch eine Zweiteilung des Blinkermoduls in zwei effektive Leuchtbereiche erreicht. Das zweite Beschichtungselement sorgt für eine weitergehende, individuelle Gestaltung des Blinkermoduls und ein optimales Zusammenspiel mit dem Gehäuse der Rückblickeinrichtung sowie zur weiteren Optimierung des Eindrucks eines zweigeteilten Blinkermoduls.

Indem das zweite Beschichtungselement die Blende mit ausbildet, konnte überraschenderweise auch die Montage des Blinkermoduls vereinfacht werden. So ist es nicht mehr notwendig, mehrere einzelne Lichtquelleneinheiten einzeln richtig innerhalb des Gehäuses der Rückblickeinrichtung anzuordnen, oder eine einzige Lichtquelleneinheit anhand des vormals von dem Gehäuse ausgebildeten Abdeckbereichs auszurichten. Vielmehr kann das Blinkermodul als Ganzes einschließlich Blende von hinten an die Innenfläche des Gehäuses angeordnet werden. Das Blinkermodul wird mit anderen Worten als kompaktes und komplettes Bauteil bereitgestellt, wodurch die Montage erleichtert wird.

Im Sinne dieser Erfindung wird unter der Wendung "anordnen von Element X auf Element Y" verstanden, dass das Element X oberhalb des Elements Y angeordnet ist. Dazu kann das Element X unmittelbar auf Element Y aufliegen, muss es aber nicht. Es können auch weitere Elemente zumindest bereichsweise zwischen Element X und Element Y angeordnet sein, insbesondere sandwichartig. Damit Element X auf Element Y angeordnet ist, ist also erforderlich, dass das Element Y entweder direkt auf dem Element X aufliegt, oder aber vermittelt durch andere Elemente zumindest im indirekten Kontakt mit dem Element X steht. Mit anderen Worten, ein Glas ist auch dann auf einem Tisch angeordnet, wenn sich zwischen dem Glas und dem Tisch ein Untersetzer befindet. Wenn das Glas jedoch über dem Untersetzer schwebt, ist es im Sinne der Terminologie dieser Erfindung nicht mehr auf dem Tisch angeordnet.

Weitere Merkmale und Vorteile der Erfindung ergeben sich aus der nachfolgenden Beschreibung, in der bevorzugte Ausführungsformen der Erfindung anhand von schematischen Zeichnungen und Diagrammen erläutert sind.

Dabei zeigen:
- Figur 1: eine schematische Teilexplosions-Darstellung eines erfindungsgemäßen Blinkermoduls gemäß dem zweiten Aspekt der Erfindung;
- Figur 2: eine schematische Darstellung einer erfindungsgemäßen Rückblickeinrichtung gemäß dem dritten Aspekt der Erfindung;
- Figur 3: ein Ablaufdiagramm eines erfindungsgemäßen Verfahrens gemäß dem ersten Aspekt der Erfindung;

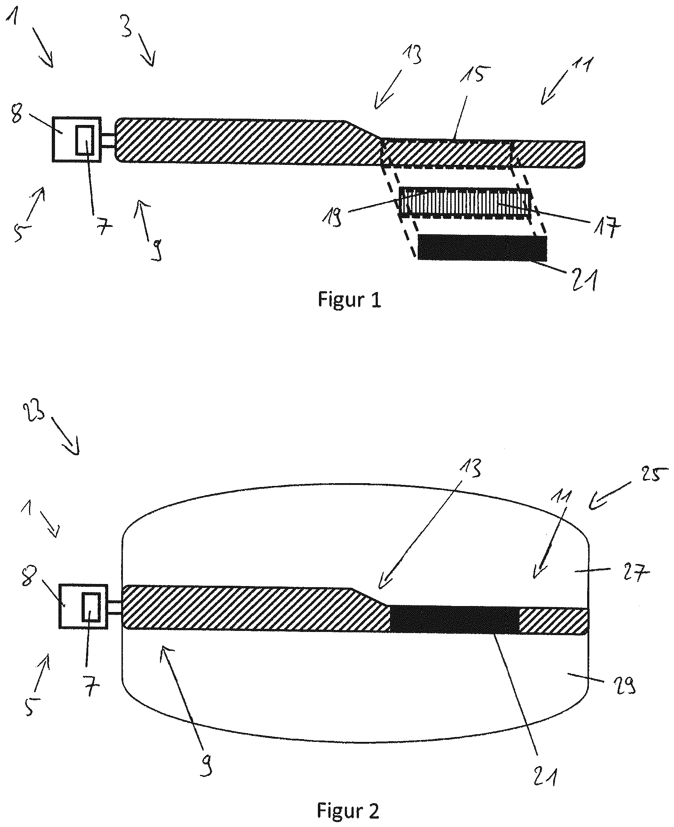

Figur 1 zeigt ein erfindungsgemäßes Blinkermodul 1 gemäß dem zweiten Aspekt der Erfindung in einer Teilexplosions-Darstellung.

Das Blinkermodul 1 umfasst ein Leuchtelement 3, das einen Lichtleiter mit einer mit diesem einstückig ausgebildeten Lichtscheibe aufweist. Das Blinkermodul 1 umfasst ferner eine Leuchtmitteleinheit 5, welche zumindest ein Leuchtmittel 7, beispielsweise in Form einer LED, aufweist, welches auf einer Leiterplatine 8 angeordnet ist. Das von der Leuchtmitteleinheit 5 emittierte Licht wird an einem ersten Ende 9 des Leuchtelements 3 in den Lichtleiter eingekoppelt und propagiert anschließend im Lichtleiter. Mittels der Lichtscheibe wird ein flächiger Beleuchtungseindruck entlang des Lichtleiters erreicht. Die in Figur 1 dargestellte schematische Ansicht, ist aus einer Blickrichtung des Gegenverkehrs dargestellt. Das Leuchtelement 3 weist dabei eine ebene (in Figur 1 in der Zeichenebene verlaufende) Frontpartie auf. Es sind jedoch auch beliebige andere Oberflächenformen möglich.

In einem Endabschnitt 11 des Leuchtelements 3, der dem ersten Ende 9 gegenüber liegt, verjüngt sich das Leuchtelement 3 im Verlauf eines Übergangsbereichs 13 von einer ersten, beispielsweise vertikal breiten, Ausdehnung hin zu einer zweiten, beispielsweise vertikal schmaleren, Ausdehnung.

Im Anschluss an den Übergangsbereich 13 schließt sich ein erster Oberflächenbereich 15 des Leuchtelements 3 an. In Figur 1 ist dieser erste Oberflächenbereich 15 durch ein gestrichelt eingezeichnetes Rechteck repräsentiert. Dabei umgibt der erste Oberflächenbereich 15 das Leuchtelement 3 vollständig umfänglich. In Figur 1 ist allerdings nur der Teil des ersten Oberflächenbereichs 15 der Frontpartie des Leuchtelements 3 zu sehen. Auf dem ersten Oberflächenbereich 15 ist ein erstes Beschichtungselement 17 angeordnet. Das erste Beschichtungselement 17 ist dabei direkt auf dem Leuchtelement angeordnet und als Reflektorschicht ausgebildet. Letzteres hat den Zweck, dass Licht, das innerhalb des Leuchtelements 3, insbesondere innerhalb des Lichtleiters, von dem ersten Ende 9 in Richtung des gegenüberliegenden Endes propagiert in dem Bereich des ersten Oberflächenbereichs 15 nicht aus dem Leuchtelement 3 austreten kann. Vielmehr wird im Bereich des ersten Oberflächenbereichs 15 das Licht durch die Reflektorschicht in das Leuchtelement zurückreflektiert. Dadurch wird sichergestellt, dass eine ausreichende Lichtintensität für den in Figur 1 rechts neben dem ersten Oberflächenbereich liegenden Teil des Endabschnitts 11 zur Verfügung steht. Dadurch wird das Leuchtelement 3 in einen ersten Leuchtbereich (in Figur 1 links von dem ersten Oberflächenbereich 15) und in einen zweiten Leuchtbereich (in Figur 1 rechts von dem ersten Oberflächenbereich 15) unterteilt. Der bedingt durch das erste Beschichtungselement 17 geringere Verlust von Lichtintensität in dem Leuchtelement (3) führt mithin gleichzeitig zu einer homogenen, oder zumindest homogeneren, Ausleuchtung des Leuchtelements 3.

Auf einem zweiten Oberflächenbereich 19 (der mit dem in Figur 1 gezeigten ersten Beschichtungselement 17 zusammenfällt) des ersten Beschichtungselements 17 ist unmittelbar ein zweites Beschichtungselement 21 angeordnet. Während das erste Beschichtungselement 17 das Leuchtelement 3 umfänglich umgibt, belegt der zweite Oberflächenbereich 19 nur einen Teil der Fläche des ersten Oberflächenbereichs 15, nämlich den Teil auf der Frontpartie des Leuchtelements 3. Der Grund liegt darin, dass das zweite Beschichtungselement 21 nicht mehr verhindern muss, dass Licht aus dem Leuchtelement 3 austreten kann und/oder das Licht aus dem Leuchtelement 3 von dem zweiten Beschichtungselement 21 absorbiert werden kann. Die Funktion, dies zu verhindern oder zumindest zu reduzieren, wird erfindungsgemäß von dem ersten Beschichtungselement 17 übernommen. Vielmehr dient es dazu, eine Blende auszubilden, um mit einem Gehäuse einer Rückblickeinrichtung passend zusammenwirken zu können. Dazu ist das zweite Oberflächenelement 21 als exponiertes Element in Form eines Quaders ausgebildet, um den bündigen Abschluss zu erreichen. Die Ausdehnung des exponierten Elements erfolgt dabei senkrecht zur Zeichenebene der Figur 1 und ist Figur 1 nicht zu entnehmen.

Figur 2 zeigt eine erfindungsgemäßes Rückblickeinrichtung 23 gemäß dem dritten Aspekt der Erfindung in einer schematische Darstellung. Die Rückblickeinrichtung 23 ist dabei aus einer Blickrichtung des Gegenverkehrs dargestellt, also mit der dem Fahrer abgewandten Seite.

Die Rückblickeinrichtung 23 umfasst ein Blinkermodul, insbesondere ein Blinkermodul 1 wie oben in Bezug auf Figur 1 beschrieben. Daher sind zum besseren Verständnis gleiche Elemente des in Figur 2 verwendeten Blinkermoduls wie die des Blinkermoduls 1 aus Figur 1 auch mit gleichen Bezugszeichen bezeichnet. Dabei ist das Blinkermodul von innen an dem Gehäuse 25 der Rückblickeinrichtung 23 angeordnet. Dabei umfasst das Gehäuse 25 zumindest ein oberes Gehäuseteil 27, auch als Scalp bezeichnet, und zumindest ein unteres Gehäuseteil 29, auch als Schwert bezeichnet. Das zweite Beschichtungselement 21 schließt dabei bündig mit dem oberen und unteren Gehäuseteil 27, 29 nach oben und unten ab. Außerdem kann eine nahezu beliebige Gestaltung des zweiten Beschichtungselements 21 erfolgen, solange das Blinkermodul 1 nur innerhalb des Gehäuses 25 der Rückblickeinrichtung 23 angeordnet werden kann.

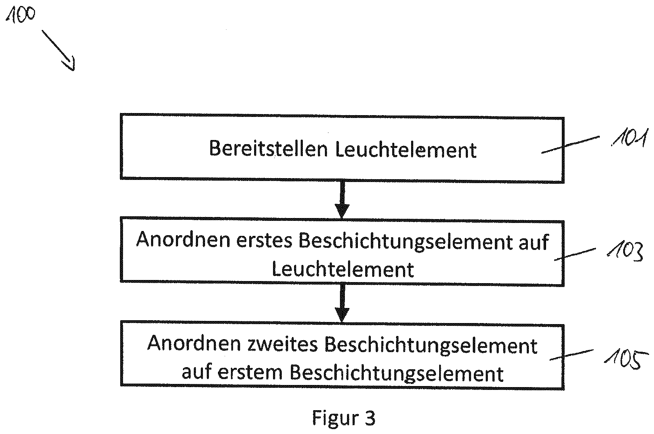

Figur 3 zeigt ein Ablaufdiagramm 100 eines erfindungsgemäßen Verfahrens gemäß dem ersten Aspekt der Erfindung.

In einem Schritt 101 wird ein Leuchtelement, insbesondere ein Leuchtelement 3, bereitgestellt. Dieses umfasst einen Lichtleiter und eine Lichtscheibe. Das Bereitstellen des Leuchtelements umfasst dabei den Schritt des Ausbildens des Leuchtelements mittels Spritzguß. Dabei wird sowohl der Lichtleiter als auch die Lichtscheibe einstückig ausgebildet.

In einem Schritt 103 wird ein erstes Beschichtungselement, insbesondere das erstes Beschichtungselement 17, auf dem Leuchtelement auf einem ersten Oberflächenbereich, insbesondere dem ersten Oberflächenbereich 15, des Leuchtelements angeordnet. Das Anordnen des ersten Beschichtungselements umfasst dabei den Schritt des Ausbildens des ersten Beschichtungselements auf dem Leuchtelement mittels Anspritzens. Mit anderen Worten, das erste Beschichtungselement wird an das in Schritt 101 ausgebildete Leuchtelement im ersten Oberflächenbereich angespritzt und damit einerseits ausgebildet und andererseits direkt an dem Leuchtelement angeordnet.

In einem Schritt 105 wird ein zweites Beschichtungselement, insbesondere das zweites Beschichtungselement 21, auf dem ersten Oberflächenelement auf einem zweiten Oberflächenbereich des ersten Oberflächenelements angeordnet. Das Anordnen des zweiten Beschichtungselements umfasst dabei den Schritt des Ausbildens des zweiten Beschichtungselements auf dem ersten Oberflächenbereich mittels Anspritzens. Mit anderen Worten, das zweite Beschichtungselement wird an das in Schritt 103 ausgebildete erste Oberflächenelement im zweiten Oberflächenbereich angespritzt und damit einerseits ausgebildet und andererseits direkt an ersten Oberflächenelement angeordnet.

### Bezugszeichenliste

- 1: Blinkermodul
- 3: Leuchtelement
- 5: Leuchtmitteleinheit
- 7: Leuchtmittel
- 8: Leiterplatine
- 9: Ende
- 11: Endabschnitt
- 13: Übergangsbereich
- 15: Oberflächenbereich
- 17: Beschichtungselement
- 19: Oberflächenbereich
- 21: Beschichtungselement
- 23: Rückblickeinrichtung
- 25: Gehäuse
- 27: Gehäuseteil
- 29: Gehäuseteil
- 100: Ablaufdiagramm
- 101, 103, 105: Schritt

## Patentansprüche

1. Verfahren zur Herstellung eines Blinkermoduls (1) für eine Rückblickeinrichtung eines Kraftfahrzeugs, das den Eindruck eines zweigeteilten Blinkermoduls aufweist, umfassend die Schritte:
- Bereitstellen zumindest eines Leuchtelements (3) umfassend zumindest einen Lichtleiter und zumindest eine Lichtscheibe;
- Bereitstellen zumindest einer Leuchtmitteleinheit (5) umfassend zumindest ein Leuchtmittel, wobei die Leuchtmitteleinheit (5) dazu ausgelegt ist, von dem Leuchtmittel (7) abgestrahltes Licht in das Leuchtelement (3) einzukoppeln,
- Anordnen zumindest eines ersten Beschichtungselements (17) auf dem Leuchtelement, wobei das erste Beschichtungselement (17) als Reflektorschicht ausgebildet und auf zumindest einem ersten Oberflächenbereich (15) der Leuchtscheibe angeordnet wird, so dass das erste Beschichtungselement ein Austreten von Licht aus dem Leuchtelement verhindert und eine Zweiteilung des Blinkermoduls in zwei effektive Leuchtbereiche erreicht; und
- Anordnen zumindest eines zweiten Beschichtungselements (21) auf dem ersten Beschichtungselement (17), wobei das zweite Beschichtungselement (21) als Blende und lichtundurchlässiges Element ausgebildet und auf zumindest einem zweiten Oberflächenbereich (19) des ersten Beschichtungselements (17) angeordnet wird, wobei der erste Oberflächenbereich (15) und der zweite Oberflächenbereich (19) zumindest bereichsweise zumindest teilweise zueinander bündige Ränder aufweisen, wobei die Blende mit zumindest einem Gehäuse der Rückblickeinrichtung passend zusammenwirkend ausgebildet werden kann, um zumindest bereichsweise einen bündigen Abschluss zwischen Blende einerseits und Gehäuse andererseits zu bewirken.

2. Verfahren nach Anspruch 1, **dadurch gekennzeichnet, dass** das Bereitstellen des Leuchtelements (3) den Schritt umfasst: Ausbilden des Lichtleiters und der Lichtscheibe mittels Spritzguss, insbesondere in einem einzigen Schritt und/oder als ein einziges Element.

3. Verfahren nach einem der vorangehenden Ansprüche, **dadurch gekennzeichnet, dass** das Anordnen des ersten Beschichtungselements (17) auf dem Leuchtelement (3) den Schritt und/oder die Schritte umfasst:
- Ausbilden des ersten Beschichtungselements (17) auf dem Leuchtelement (3) mittels Angießen und/oder Anspritzen und/oder Auftragen des ersten Beschichtungselements (17) auf dem Leuchtelement (3) mittels Sprühen, Dampfen, Kleben, Lackieren und/oder Spritzen.

4. Verfahren nach einem der vorangehenden Ansprüche, **dadurch gekennzeichnet, dass** das erste Beschichtungselement (17) zumindest bereichsweise direkt auf dem ersten Oberflächenbereich (15) angeordnet wird, und/oder dass zwischen dem ersten Beschichtungselement (17) und dem Leuchtelement (3) zumindest bereichsweise zumindest ein Zwischenelement, insbesondere zumindest ein weiteres Beschichtungselement, angeordnet wird.

5. Verfahren nach einem der vorangehenden Ansprüche, **dadurch gekennzeichnet, dass** das Anordnen des zweiten Beschichtungselements (21) auf dem ersten Beschichtungselement (17) den Schritt und/oder die Schritte umfasst:
- Ausbilden des zweiten Beschichtungselements (21) auf dem ersten Beschichtungselement (17) mittels Angießen und/oder Anspritzen und/oder Auftragen des zweiten Beschichtungselements (21) auf dem ersten Beschichtungselement (17) mittels Sprühen, Dampfen, Kleben Lackieren und/oder Spritzen.

6. Verfahren nach einem der vorangehenden Ansprüche, **dadurch gekennzeichnet, dass** das zweite Beschichtungselement (21) zumindest bereichsweise zumindest ein exponiertes Element umfasst und/oder daraus besteht, wobei das exponierte Element vorzugsweise in zumindest einer Querschnittsebene senkrecht zu zumindest einer Erstreckungsrichtung, insbesondere der Haupterstreckungsrichtung, des exponierten Elements einen rechteckigen, dreieckigen, quadratischen, vieleckigen, sternförmigen, kreisförmigen, ovalen, ellipsoiden, parabelförmigen, zylindrischen und/oder halbkreisförmigen Querschnitt aufweist.

7. Verfahren nach einem der vorangehenden Ansprüche, **dadurch gekennzeichnet, dass** das erste Beschichtungselement (17) und das zweite Beschichtungselement (21) unterschiedliche Farben aufweisen.

8. Verfahren nach einem der vorangehenden Ansprüche, **dadurch gekennzeichnet, dass** zumindest ein Endabschnitt (11) und/oder Mittelabschnitt des Leuchtelements (3), insbesondere des Lichtleiters und/oder der Lichtscheibe, zumindest einen verjüngten Abschnitt aufweist bzw. aufweisen.

9. Verfahren nach Anspruch 8, **dadurch gekennzeichnet, dass** sich der erste Oberflächenbereich (15) und der zweite Oberflächenbereich (19) zumindest teilweise entlang des verjüngten Abschnitts erstrecken.

10. Verfahren nach einem der Ansprüche 8 oder 9, **dadurch gekennzeichnet, dass** das erste Beschichtungselement (17) und/oder das zweite Beschichtungselement (21) den verjüngten Abschnitt zumindest bereichsweise vollständig einschließen.

11. Verfahren nach einem der vorangehenden Ansprüche, **dadurch gekennzeichnet, dass** die Elemente aus der Gruppe umfassend Leuchtelement (3), Lichtleiter, Lichtscheibe, erstes Beschichtungselement (17) und zweites Beschichtungselement (21) einstückig miteinander ausgebildet sind.

12. Verfahren nach einem der vorangehenden Ansprüche, **dadurch gekennzeichnet, dass** der Schritt des Bereitstellens zumindest einer Leuchtmitteleinheit (5) das Bereitstellen des zumindest einen Leuchtmittels in Form zumindest einer LED, zumindest einer Optik, vorzugsweise zumindest einer Linse und/oder zumindest eines Reflektors, zumindest eines elektrischen Anschlussmittels zum Anschluss der Leuchtmitteleinheit (5) an ein elektrisches Strom- und/oder Spannungsnetz, vorzugsweise an zumindest ein Bordnetz, und/oder zumindest eine Leiterplatine, umfasst, wobei vorzugsweise die Leuchtmitteleinheit (5) dazu ausgelegt ist, von dem Leuchtmittel (7) abgestrahltes Licht in das Leuchtelement (3), insbesondere den Lichtleiter, einzukoppeln.

13. Verfahren nach einem der vorangehenden Ansprüche, **dadurch gekennzeichnet, dass** das Bereitstellen des Leuchtelements (3), das Anordnen des ersten Beschichtungselements (17) und/oder das Anordnen des zweiten Beschichtungselements (21) mittels Einkomponenten-Spritzguss und/oder Mehrkomponentenspritzguss, insbesondere Zweikomponenten-Spritzguss und/oder Dreikomponenten-Spritzguss, durchgeführt wird.

14. Blinkermodul (1) hergestellt mit einem Verfahren gemäß einem der Ansprüche 1 bis 13, wobei der Lichtleiter die Blinker-Funktion erfüllt und die Lichtscheibe dazu ausgelegt ist, Design-Vorgaben zu erfüllen.

15. Rückblickeinrichtung (23) für ein Kraftfahrzeug umfassend zumindest ein Blinkermodul (1) nach Anspruch 14, wobei die Blende mit zumindest einem Gehäuse der Rückblickeinrichtung passend zusammenwirkt, um zumindest bereichsweise einen bündigen Abschluss zwischen Blende einerseits und Gehäuse andererseits zu bewirken.

16. Kraftfahrzeug umfassend zumindest eine Rückblickeinrichtung nach Anspruch 15.

## Claims

1. A method for producing a blinker module (1) for a rearview device of a motor vehicle, having the appearance of a bisected blinker module, comprising the following steps:
- providing at least one lighting element (3) comprising at least one light guide and at least one lens;
- providing at least one lighting means unit (5) comprising at least one lighting means, wherein the lighting means unit (5) is adapted to couple light irradiated by the lighting means (7) into the lighting element (3),
- arranging at least one first coating element (17) on the lighting element, wherein the first coating element (17) is formed as a reflector layer and is arranged on at least one first surface region (15) of the lens such that the first coating element prevents light from escaping the lighting element and achieves a bisection of the blinker module into two functional lighting regions; and
- arranging at least one second coating element (21) on the first coating element (17), wherein the second coating element (21) is formed as a shutter and an opaque element and is arranged on at least one second surface region (19) of the first coating element (17), wherein the first surface region (15) and the second surface region (19) have edges which are at least partially flush with each other at least in regions, wherein the shutter can be formed to fittingly cooperate with at least one housing of the rearview device in order to at least regionally effect a flush finish between the shutter on the one side and the housing on the other.

2. The method according to Claim 1, **characterized in that** providing the lighting element (3) comprises the following step:
forming the light guide and the lens by means of injection molding, in particular in a single step and/or as a single element.

3. The method according to any one of the preceding claims, **characterized in that** arranging the first coating element (17) on the lighting element (3) comprises the following step and/or steps:
- forming the first coating element (17) on the lighting element (3) by means of overmolding and/or injection molding and/or overlaying of the first coating element (17) on the lighting element (3) by means of spraying, steaming, gluing, lacquering and/or injecting.

4. The method according to any one of the preceding claims, **characterized in that** the first coating element (17) is at least in regions arranged directly on the first surface region (15) and/or **in that** at least one intermediate element, in particular at least one further coating element, is arranged at least in regions between the first coating element (17) and the lighting element (3).

5. The method according to any one of the preceding claims, **characterized in that** arranging the second coating element (21) on the first coating element (17) comprises the following step and/or steps:
- forming the second coating element (21) on the first coating element (17) by means of overmolding and/or injection molding and/or overlaying of the second coating element (21) on the first coating element (17) by means of spraying, steaming, gluing, lacquering and/or injecting.

6. The method according to any one of the preceding claims, **characterized in that**, at least in regions, the second coating element (21) comprises at least one exposed element and/or consists thereof, wherein the exposed element preferably has a rectangular, triangular, square, polygonal, star-shaped, circular, oval, elliptical, parabolic, cylindrical and/or demi-circular cross-section in at least one cross-section plane perpendicular to at least one extension direction, in particular the main extension direction, of the exposed element.

7. The method according to any one of the preceding claims, **characterized in that** the first coating element (17) and the second coating element (21) have different colors.

8. The method according to any one of the preceding claims, **characterized in that** at least one end portion (11) and/or middle portion of the lighting element (3), in particular of the light guide and/or the lens, has or have at least one tapered portion.

9. The method according to Claim 8, **characterized in that** the first surface region (15) and the second surface region (19) at least partially extend along the tapered portion.

10. The method according to either one of Claims 8 or 9, **characterized in that** the first coating element (17) and/or the second coating element (21) completely enclose the tapered portion at least in regions.

11. The method according to any one of the preceding claims, **characterized in that** the elements of the group comprising the lighting element (3), the light guide, the lens, the first coating element (17) and the second coating element (21) are formed together as a single piece.

12. The method according to any one of the preceding claims, **characterized in that** the step of providing at least one lighting means element (5) comprises providing the at least one lighting means in the form of at least one LED, at least one optics part, preferably at least one lens and/or at least one reflector, at least one electrical connection means for connecting the lighting means unit (5) to an electrical power network and/or voltage network, preferably to at least one on-board network, and/or at least one printed circuit board, wherein the lighting means unit (5) is preferably adapted to couple light irradiated by the lighting means (7) into the lighting element (3), in particular the light guide.

13. The method according to any one of the preceding claims, **characterized in that** providing the lighting element, arranging the first coating element (17), and/or arranging the second coating element (21) is performed by means of single-component injection molding or multiple-component injection molding, in particular two-component injection molding and/or three-component injection molding.

14. A blinker module (1), produced with a method according to any one of Claims 1 to 13, wherein the light guide provides the blinker function and the lens is adapted to satisfy design requirements.

15. A rearview device (23) for a motor vehicle, comprising at least one blinker module (1) according to Claim 14, wherein the shutter cooperates fittingly with at least one housing of the rearview device in order to effect a flush finish, at least in regions, between the shutter on the one side and the housing on the other.

16. A motor vehicle comprising at least one rearview device according to Claim 15.

## Revendications

1. Procédé de fabrication d'un module de clignotant (1) pour un dispositif de rétroviseur d'un véhicule à moteur, lequel présente l'apparence d'un module de clignotant en deux parties, comprenant les étapes :
- mise à disposition d'au moins un élément d'éclairage (3) comprenant au moins un guide d'ondes optiques et au moins une vitre transparente ;
- mise à disposition d'au moins une unité de moyen d'éclairage (5) comprenant au moins un moyen d'éclairage, l'unité de moyen éclairage (5) étant conçue pour injecter la lumière émise par le moyen d'éclairage (7) dans l'élément d'éclairage (3) ;
- disposition d'au moins un premier élément de revêtement (17) sur l'élément d'éclairage, le premier élément de revêtement (17) étant réalisé comme une couche réfléchissante et étant disposé sur au moins une première zone de surface (15) de la vitre d'éclairage, de telle sorte que le premier élément de revêtement empêche une sortie de la lumière hors de l'élément d'éclairage et réalise une division en deux parties du module de clignotant en deux zones d'éclairage efficaces ; et
- disposition d'au moins un deuxième élément de revêtement (21) sur le premier élément de revêtement (17), le deuxième élément de revêtement (21) étant réalisé comme un obturateur et un élément opaque et étant disposé sur au moins une deuxième zone de surface (19) du premier élément de revêtement (17), la première zone de surface (15) et la deuxième zone de surface (19) présentant au moins par endroits au moins partiellement des bords à fleur l'un de l'autre, l'obturateur pouvant être réalisé pour coopérer de façon adaptée avec au moins un boîtier du dispositif de rétroviseur, pour réaliser au moins par endroits une jointure à fleur entre l'obturateur d'une part et le boîtier d'autre part.

2. Procédé selon la revendication 1, **caractérisé en ce que** la mise à disposition de l'élément d'éclairage (3) comprend l'étape : réalisation du guide d'ondes optiques et de la vitre transparente par moulage par injection, en particulier en une seule étape et/ou comme un seul élément.

3. Procédé selon l'une des revendications précédentes, **caractérisé en ce que** la disposition du premier élément de revêtement (17) sur l'élément d'éclairage (3) comprend l'étape et/ou les étapes :
réalisation du premier élément de revêtement (17) sur l'élément d'éclairage (3) par coulée et/ou injection et/ou application du premier élément de revêtement (17) sur l'élément d'éclairage (3) par pulvérisation, vaporisation, collage, laquage et/ou injection.

4. Procédé selon l'une des revendications précédentes, **caractérisé en ce que** le premier élément de revêtement (17) est disposé au moins par endroits directement sur la première zone de surface (15), et/ou **en ce qu'**un élément intermédiaire, en particulier au moins un élément de revêtement supplémentaire est disposé entre le premier élément de revêtement (17) et l'élément d'éclairage (3), au moins par endroits.

5. Procédé selon l'une des revendications précédentes, **caractérisé en ce que** la disposition du deuxième élément de revêtement (21) sur le premier élément d'éclairage (17) comprend l'étape et/ou les étapes :
- réalisation du deuxième élément de revêtement (21) sur le premier élément de revêtement (17) par coulée et/ou injection et/ou application du deuxième élément de revêtement (21) sur le premier élément de revêtement (17) par pulvérisation, vaporisation, collage, laquage et/ou injection.

6. Procédé selon l'une des revendications précédentes, **caractérisé en ce que** le deuxième élément de revêtement (21) comprend au moins par endroits au moins un élément exposé et/ou se compose de celui-ci, l'élément exposé présentant de préférence, dans au moins un plan transversal verticalement dans au moins une direction d'extension, en particulier dans la direction d'extension principale, de l'élément exposé, une section rectangulaire, triangulaire, carrée, polygonale, en étoile, circulaire, ovale, ellipsoïde, parabolique, cylindrique et/ou semi-circulaire.

7. Procédé selon l'une des revendications précédentes, **caractérisé en ce que** le premier élément de revêtement (17) et le deuxième élément de revêtement (21) présentent des couleurs différentes.

8. Procédé selon l'une des revendications précédentes, **caractérisé en ce qu'**au moins une section d'extrémité (11) et/ou une section médiane de l'élément d'éclairage (3), en particulier du guide d'ondes optiques et/ou de la vitre transparente, présente ou présentent au moins une section rétrécie.

9. Procédé selon la revendication 8, **caractérisé en ce que** la première zone de surface (15) et la deuxième zone de surface (19) s'étendent au moins partiellement le long de la section rétrécie.

10. Procédé selon l'une des revendications 8 ou 9, **caractérisé en ce que** le premier élément de revêtement (17) et/ou le deuxième élément de revêtement (21) incluent complètement la section rétrécie au moins par endroits.

11. Procédé selon l'une des revendications précédentes, **caractérisé en ce que** les éléments du groupe comprenant l'élément d'éclairage (3), le guide d'ondes optiques, la vitre transparente, le premier élément de revêtement (17) et le deuxième élément de revêtement (21) sont réalisés d'une pièce les uns avec les autres.

12. Procédé selon l'une des revendications précédentes, **caractérisé en ce que** l'étape de la mise à disposition d'au moins une unité de moyen d'éclairage (5) comprend la mise à disposition d'au moins un moyen d'éclairage sous la forme au moins d'une LED, au moins d'une optique, de préférence au moins d'une lentille et/ou au moins d'un réflecteur, au moins d'un moyen de connexion électrique pour la connexion de l'unité de moyen d'éclairage (5) à un réseau d'électricité et/ou de tension, de préférence à au moins un réseau de bord, et/ou au moins d'une carte de circuit imprimé, l'unité de moyen d'éclairage (5) étant conçue de préférence pour injecter la lumière émise par le moyen d'éclairage (7) dans l'élément d'éclairage (3), en particulier dans le guide d'ondes optiques.

13. Procédé selon l'une des revendications précédentes, **caractérisé en ce que** la mise à disposition de l'élément d'éclairage, la disposition du premier élément de revêtement (17) et/ou la disposition du deuxième élément de revêtement (21) sont exécutées par moulage par injection monocomposant et/ou moulage par injection multicomposant, en particulier moulage par injection bicomposant et/ou moulage par injection tricomposant.

14. Module de clignotant (1) fabriqué avec un procédé selon l'une des revendications 1 à 13, le guide d'ondes optiques remplissant la fonction de clignotant et la vitre transparente étant conçue pour être conforme aux prescriptions de conception.

15. Dispositif de rétroviseur (23) pour un véhicule à moteur, comprenant au moins un module de clignotant (1) selon la revendication 14, l'obturateur coopérant de façon adaptée avec moins un boîtier du dispositif de rétroviseur, pour réaliser au moins par endroits une jointure à fleur entre l'obturateur d'une part et le boîtier d'autre part.

16. Véhicule à moteur comprenant au moins un dispositif de rétroviseur selon la revendication 15.
